# EUROPEAN PATENT APPLICATION

(11) **EP 4 737 217 A1**
(43) Date of publication of application: **06.05.2026**
(21) Application number: 25209663.1
(22) Date of filing: 20.10.2025
(51) Int. Cl.: B60R 5/04, B60R 13/02

(54) **SHIELDING MEMBER AND SHIELDING MECHANISM**

(30) Priority: 31.10.2024 JP 2024192386
(71) Applicant: Hayashi Telempu Corporation, Nagoya-shi, Aichi 460-0013 (JP)
(72) Inventor: NISHIBORI, Noriyasu, Nagoya-shi, 460-0013 (JP)
(74) Representative: Mathys & Squire

(57) **Abstract**

A shielding member (1) that suppresses penetration of noise into a vehicle interior both in a spread sheet state as a single sheet and in a folded state. The shielding member (1) comprises a flexible sheet member (2) that has a plurality of plate parts (3a, 3b) and an intermediate part (4) located between adjacent plate parts (3a, 3b). The sheet member (2) is foldable around the intermediate part (4) and can selectively assume a state in which the sheet member (2) is spread as a single plate and a state in which the plurality of plate parts (3a, 3b) are folded over each other. The plate parts (3a, 3b), with the exception of the intermediate part (4), contain a sound-absorbing layer (6a).

## Description

### Technical Field

This invention relates to a shielding member and a shielding mechanism.

### Background Art

Patent Document 1 (JP7377681B), Patent Document 2 (WO2021/251193A) and Patent Document 3 (JP6863242B) describe shielding members (also called "cover members", "tonneau covers" or "cargo covers") that cover a luggage compartment from above, at the rear of a vehicle. The shielding members described in Patent Documents 1 and 2 are foldable, and the shielding member described in Patent Document 3 can be rolled up. A shielding member may be removed from the top of the luggage compartment when tall luggage is placed in the luggage compartment, when luggage is not placed in the luggage compartment, or when, for example, a seat is folded forward to form a flat surface continuous with the luggage compartment surface for a passenger to lie down. The shielding members described in Patent Documents 1 and 2 are folded and stored outside the vehicle when removed from the top of the luggage compartment. The shielding member described in Patent Document 3 is rolled up and stored in a rolled-up state when removed from the top of the luggage compartment.

### Summary of the Invention

A shielding member that covers the luggage compartment from above has the effect of preventing the interior of the luggage compartment from being seen and also suppressing noise from the luggage compartment from entering the vehicle interior in which passenger seats are located. In particular, the example of a shielding member described in Patent Document 2 has a sound-insulating layer and a sound-absorbing layer in an intermediate layer, and thus has a good soundproofing effect. However, if the shielding member is removed from the top of the luggage compartment, the effect of suppressing noise from entering the vehicle interior is impaired. In Patent Documents 1-3, no consideration is given to the fact that the soundproofing effect is impaired when the shielding member is removed from the top of the luggage compartment and folded or rolled up. In addition, no conventional shielding member installed in a location of a vehicle other than the luggage compartment has been used to shield the vehicle interior from being seen from the outside and to provide soundproofing effect.

The object of the present invention is to provide a shielding member and a shielding mechanism that suppresses the penetration of noise into a vehicle interior in an expanded sheet state and that also suppresses penetration of noise into a vehicle interior in a folded state.

A shielding member of the invention comprises a flexible sheet member that has a plurality of plate parts and an intermediate part located between the adjacent plate parts, wherein the sheet member is foldable at the intermediate part and can selectively assume a state in which the sheet member is spread out as a single plate and a state in which the plurality of plate parts are folded over each other, and the plate parts, with the exception of the intermediate part, contain a sound-absorbing layer.

The shielding member and shielding mechanism of the present invention suppress noise penetration into a vehicle interior when the shielding member is spread out as a single sheet, and also, have the effect of suppressing noise penetration into the vehicle interior when the shielding member is folded.

### Brief Description of the Drawings

Fig. 1A is a perspective view showing a spread state of a shielding member of the first embodiment of the invention.
Fig. 1B is a side view of the shielding member shown in Fig. 1A.
Fig. 2A is a perspective view showing a folded state of the shielding member of the first embodiment of the invention.
Fig. 2B is a side view of the shielding member shown in Fig. 2A.
Fig. 3 is an enlarged cross-sectional view of a part of a sheet member of the shielding member of the first embodiment.
Fig. 4 is a side view of a vehicle, schematically showing the first embodiment of the shielding member in use.
Fig. 5A is a side view of a vehicle, schematically showing the first embodiment of the shielding member in its housed state.
Fig. 5B is a perspective view schematically showing the first embodiment of the shielding member in its housed state.
Fig. 6A is a perspective view showing a roof portion of a vehicle in which an example of a shielding member installed.
Fig. 6B is a perspective view of the shielding member shown in Fig. 6A.
Fig. 6C is a perspective view of another example of a shielding member that is installed on the roof portion of a vehicle.
Fig. 7 is a schematic view schematically showing the positional relationship between wires, sheet members, and a hinge mechanism of the shielding member shown in Fig. 1A.
Fig. 8A is a perspective view showing the spread state of a shielding member with three plate parts and two intermediate parts.
Fig. 8B is a side view of the shielding member shown in Fig. 8A.
Fig. 9 is an exploded view of the shielding member shown in Fig. 1A.
Fig. 10 is an enlarged perspective view of the hinge mechanism of the shielding member shown in Fig. 1A in which the top cover is removed.

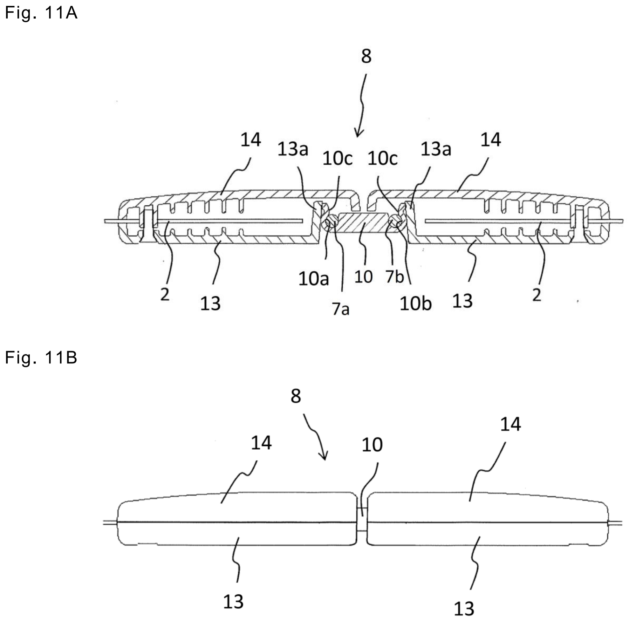

Fig. 11A is a cross-sectional view of the hinge mechanism of the shielding member shown in Fig. 1A.
Fig. 11B is a front view of the hinge mechanism of the shielding member shown in Fig. 1A.
Fig. 12 is an enlarged plan view of the main part of the shielding member of a comparative example.
Fig. 13 is an enlarged plan view of the main part of the shielding member shown in Fig. 1A.
Fig. 14 is a cross-sectional view taken along line A-A in Fig. 1A.
Fig. 15 is a side view of a vehicle used in testing.
Fig. 16A is a graph showing the results of sound reception in the vicinity of the rear tires when sound is generated in a rear seat.
Fig. 16B is a graph showing the results of sound reception in the vicinity of the motor when sound is generated in a rear seat.
Fig. 16C is a graph showing the results of sound reception in a luggage compartment when the sound is generated in a rear seat.
Fig. 17 is a cross-sectional view of a part of a shielding member of another embodiment of the invention.
Fig. 18A is a cross-sectional view schematically showing the first stage of stitching of an example of a suitable stitching method for a sheet member of a shielding member.
Fig. 18B is a cross-sectional view schematically showing the second stage of stitching of the stitching method shown in Fig. 18A.
Fig. 19 is a cross-sectional view of the main part of a preferred form of the shielding member.
Fig. 20A is a plan view schematically showing another example of a suitable stitching method for a sheet member of the shielding member.
Fig. 20B is a plan view schematically showing still another example of a suitable stitching method for a sheet member of the shielding member.
Fig. 21A is a cross-sectional view schematically showing the main part of an example of a shielding mechanism including the shielding member and a suitable installation structure.
Fig. 21B is a cross-sectional view schematically showing the main part of another example of a shielding mechanism including the shielding member and a suitable installation structure.
Fig. 22A is a graph showing the results of sound reception in the vicinity of the rear tires when the sound is generated in a rear seat.
Fig. 22B is a graph showing the results of sound reception in the vicinity of the motor when the sound is generated in a rear seat.

### Embodiments of the Invention

Embodiments of the invention are next explained with reference to the drawings.

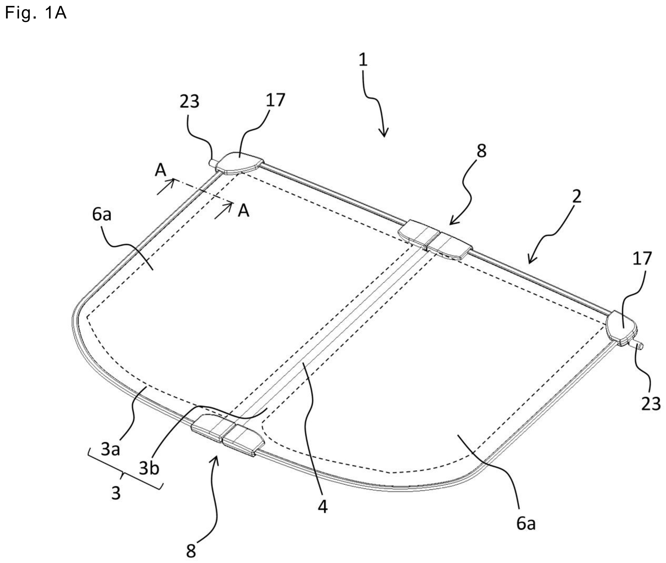

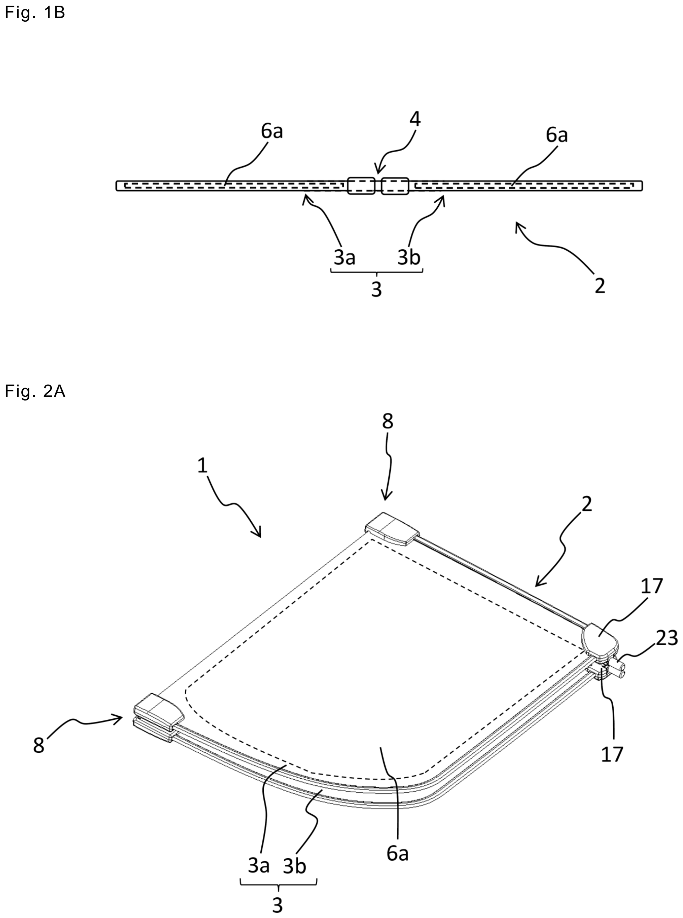

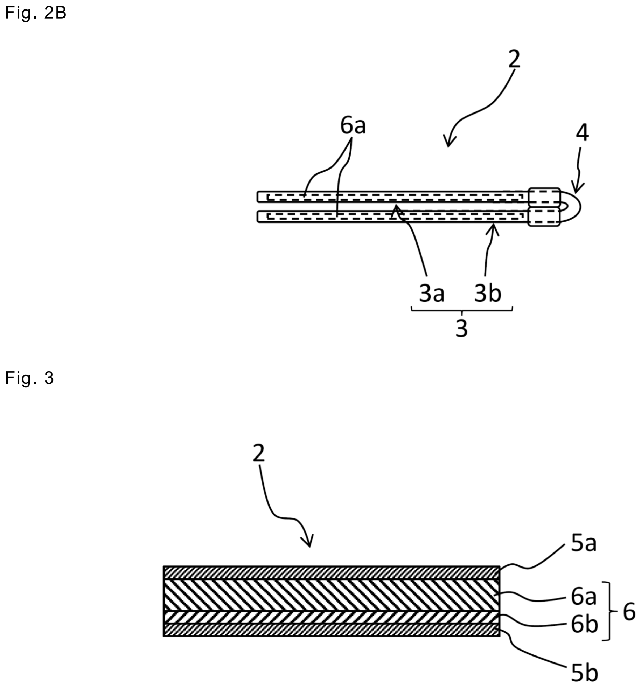

Fig. 1A is a perspective view showing a spread state of shielding member 1 of the first embodiment of the invention, and Fig. 1B is a schematic side view. Fig. 2A is a perspective view showing a folded state of shielding member 1, and Fig. 2B is a schematic side view. Fig. 3 is an enlarged cross-sectional view of a part of sheet member 2 of shielding member 1. Shielding member 1 includes flexible sheet member 2. Sheet member 2 includes a plurality of plate parts 3 and intermediate part 4 located between adjacent plate parts 3. Sheet member 2 is foldable around intermediate part 4 and can selectively assume a state in which sheet member 2 is spread out as a single plate or a state in which a plurality of plate parts 3 are folded over each other. With the exception of intermediate part 4, each of plate parts 3 includes a sound-absorbing layer 6a (indicated in Fig. 1a and 2a by dashed line).

In the configuration shown in Figs. 1A-2B, sheet member 2 has two plate parts 3 (first plate part 3a and second plate part 3b) with intermediate part 4 between first plate part 3a and second plate part 3b. Intermediate part 4 is provided with hinge mechanism 8 described below. By folding first plate part 3a and second plate part 3b around intermediate part 4, first plate part 3a and second plate part 3b overlap each other. When not folded, sheet member 2 including first plate part 3a, second plate part 3b, and intermediate part 4 is spread out as a single plate.

As enlarged and shown in Fig. 3, sheet member 2 of this embodiment mainly comprises a pair of light-shielding sheet-like skin members 5a and 5b arranged opposite each other and intermediate layer 6. Skin members 5a and 5b may be made of different materials. Skin member 5a, which is located on the interior side of a vehicle when shielding member 1 is installed in the vehicle, is, for example, a stretchable member such as a jersey woven fabric of nylon or polyester. Skin member 5b located on the outer side of the vehicle is made of, for example, a needle punched fabric. Outer skin member 5b is usually invisible and may be a lightweight needle punched fabric. However, not limited to this example, outer skin member 5b may also be a stretchable member, for example, a jersey woven fabric such as nylon or polyester.

Intermediate layer 6 is sandwiched between the pair of skin members 5a and 5b and includes at least sound-absorbing layer 6a. In the configuration shown in Fig. 3, intermediate layer 6 includes sound-absorbing layer 6a and sound-insulating layer 6b. Intermediate layer 6 has a two-layer structure in which, for example, sound-insulating layer 6b made of polyethylene and sound-absorbing layer 6a made of felt are laminated in that order from lower skin member 5b to upper skin member 5a. Thus, in the thickness direction of shielding member 1, outer (lower) skin member 5b, sound-insulating layer 6b, sound-absorbing layer 6a, and inner (upper) skin member 5a are arranged in that order.

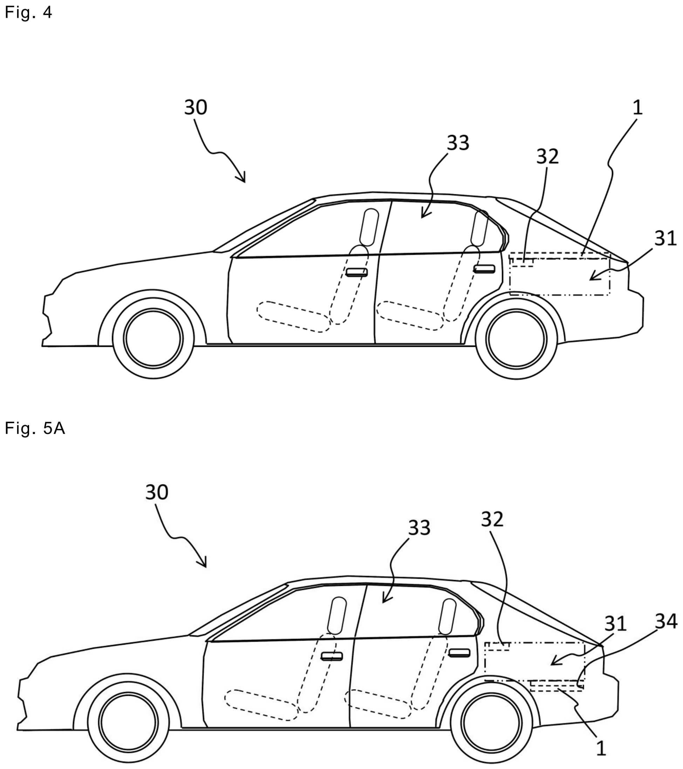

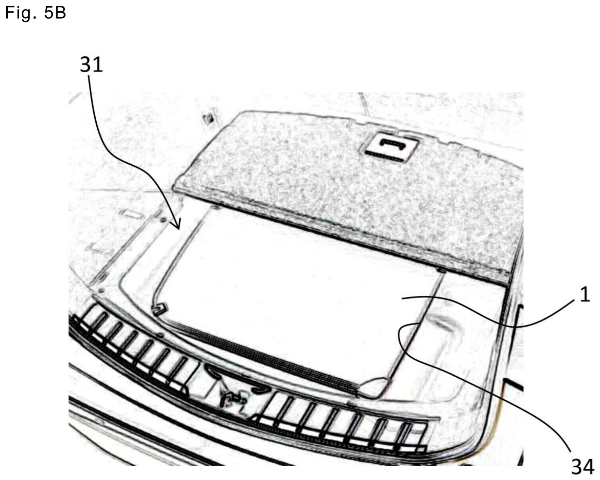

Shielding member 1 of this embodiment has a light-shielding property. When shielding member 1 is used, for example, as a tonneau cover for the luggage compartment of a vehicle, it can prevent the articles inside the luggage compartment from being seen from the outside. Furthermore, since intermediate layer 6 includes at least sound-absorbing layer 6a, noise transmission from the luggage compartment side to the vehicle interior is suppressed. As mentioned above, shielding member 1 is foldable and can be installed in a state in which shielding member 1 is spread out as a single plate and can also be stored in a folded state. Fig. 4 is a side view of a vehicle, schematically showing a state in which shielding member 1 is used as a tonneau cover that covers the luggage compartment from above. Fig. 5A is a side view of the vehicle schematically showing the state in which shielding member 1 shown in Fig. 4 is folded and housed. Fig. 5B is a perspective view of the interior of the luggage compartment. In the state shown in Fig. 4, support part 32 is provided at the top of luggage compartment 31 of vehicle 30, and shielding member 1 is removably held in a spread state as a single plate by this support part 32. Shielding member 1 prevents the interior of the luggage compartment 31 from being seen from the outside and suppresses the transmission of sound through luggage compartment 31 into the vehicle interior 33. Otherwise, as shown in Figs. 5A and 5B, recess (support part) 34 is provided in the bottom portion, or floor portion, of luggage compartment 31 to accommodate folded shielding member 1, and folded shielding member 1 can be held in recess 34. In this state, the transmission of sound from under the floor into vehicle interior 33 is suppressed by folded shielding member 1 housed in recess 34, especially by sound-insulating layer 6b and sound-absorbing layer 6a.

Usually, a tonneau cover, which is one type of shielding member 1, is placed above luggage compartment 31 to provide a shielding effect and soundproofing effect, but when tall luggage is placed in luggage compartment 31, or when the rear seats are folded forward to provide a wider space, shielding member 1 is removed from the top of luggage compartment 31 so as not to interfere with the luggage compartment. When shielding member 1 is removed, the soundproofing effect of shielding member 1 is preferably maintained such that sound transmitted from the outside does not penetrate into vehicle interior 33 via luggage compartment 31 and consequently disturb a quiet environment. Therefore, in this embodiment, shielding member 1 is removed from the top of luggage compartment 31, folded up, and placed in recess 34 provided in the bottom portion of luggage compartment 31. The transmission of sound from under the floor of the vehicle is thereby suppressed by folded shielding member 1, especially by inner sound-absorbing layer 6a and sound-insulating layer 6b. In other words, according to this embodiment, even when removed from the top of luggage compartment 31 and folded, shielding member 1 still functions as a soundproofing member and maintains a certain degree of soundproofing effect that contributes to maintaining a quiet environment in vehicle interior 33. In particular, since sound-absorbing layer 6a and sound-insulating layer 6b of each of folded plate parts 3 of shielding member 1 overlap each other, an excellent soundproofing effect can be expected due to the multiple soundproofing wall structure. From this point of view, the position in which folded shielding member 1 is held is preferably in the path of sound transmission from the outside to vehicle interior 33. For example, recess 34 is preferably provided in the transmission path of noise from near the rear tires to vehicle interior 33 or in the transmission path of the sound of the motor of an electric vehicle to vehicle interior 33. The position for holding folded shielding member 1 is not limited to the bottom portion of luggage compartment 31 but, although not shown, may also be in the side trim at the position of the inner surface of the side wall of luggage compartment 31. In such a case, the side trim may be provided with a supporting projection or the like instead of recess 34 to hold folded shielding member 1.

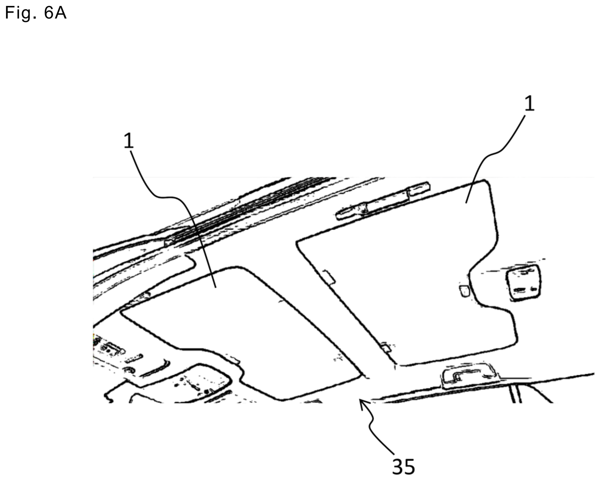

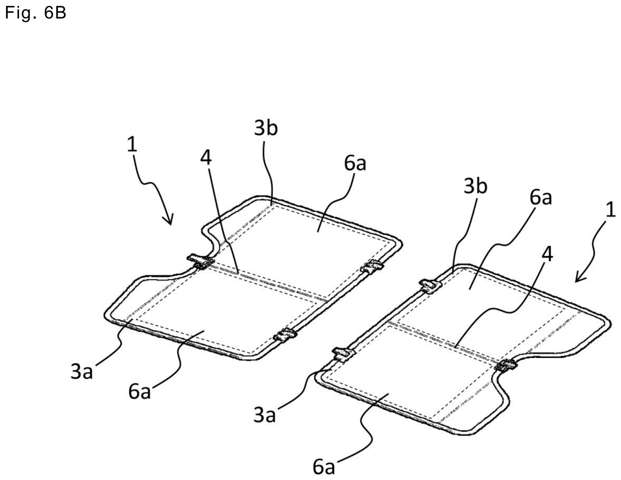

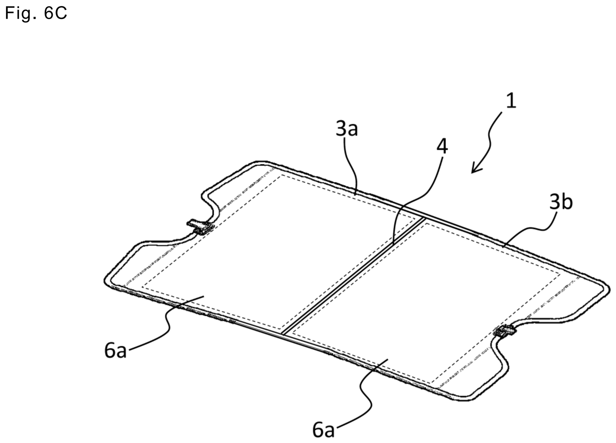

In the aforementioned example, shielding member 1 is used as a tonneau cover, but shielding member 1 is not limited to use as a tonneau cover and may be shielding member 1 located on ceiling portion (roof portion) 35 of the vehicle shown in Fig. 6A. An example of this type of shielding member 1 located on roof portion 35 is shown in Fig. 6B. In the example shown in Figs. 6A and 6B, two shielding members 1 are installed on roof portion 35. These shielding members 1 also have at least sound-absorbing layer 6a inside each of plate parts 3a and 3b and can be folded around intermediate part 4. In the example shown in Fig. 6C, one large shielding member 1 is installed on roof portion 35 and also has at least sound-absorbing layer 6a inside plate parts 3a and 3b, and is further foldable around the intermediate part 4. These shielding members 1 are held on roof portion 35 in a spread state as a single plate to block the transmission of light and to suppress the penetration of sound into vehicle interior 33 mainly from above the vehicle. When removed from roof portion 35 and folded, shielding member 1 is preferably positioned in the path of sound transmission from the outside to vehicle interior 33 to reduce sound penetration. Folded shielding member 1 may be held on roof portion 35 or may be held on the bottom portion of luggage compartment 31, in the side trim, etc., similar to a tonneau cover.

When shielding member 1 has sound-insulating layer 6b as shown in Fig. 3, sound-insulating layer 6b more preferably also has thermal barrier properties. In particular, when shielding member 1 is installed on roof portion 35 as shown in Figs. 6A-6C, sound-insulating layer 6b preferably has a thermal barrier property in order to prevent vehicle interior 33 from becoming excessively hot.

The foldable structure of shielding member 1 of this embodiment is next described. In addition to aforementioned sheet member 2, shielding member 1 has a plurality of wires 7 provided corresponding to each plate part 3. Sheet member 2 is a thin sheet having flexibility and an almost rectangular outer shape that includes a plurality of plate parts 3 and intermediate part 4. The plurality of wires 7 are substantially the same shape and are closed loops having an almost rectangular outline. As an example, if sheet member 2 includes two plate parts (first plate part 3a and second plate part 3b), sheet member 2 has two wires (first wire 7a and second wire 7b). First wire 7a surrounds first plate part 3a of sheet member 2, and second wire 7b surrounds second plate part 3b. Intermediate part 4 of sheet member 2 is located between first wire 7a and second wire 7b and connects first plate part 3a and second plate part 3b. Sheet member 2 is continuous over first plate part 3a and second plate part 3b. In the illustrated embodiment, first wire 7a surrounds entire first plate part 3a and second wire 7b surrounds entire second plate part 3b, but sheet member 2 is not limited to this configuration. First wire 7a need only surround at least a portion of first plate part 3a. In other words, first wire 7a may not be a closed loop but may be a form that is partially broken and not continuous, and a portion of first plate part 3a may not be surrounded by first wire 7a. Similarly, second wire 7b need only surround at least a portion of second plate part 3b, and second wire 7b may not be a closed loop but may be a form that is partially broken and not continuous and second plate part 3b may comprise a portion that is not surrounded by second wire 7b.

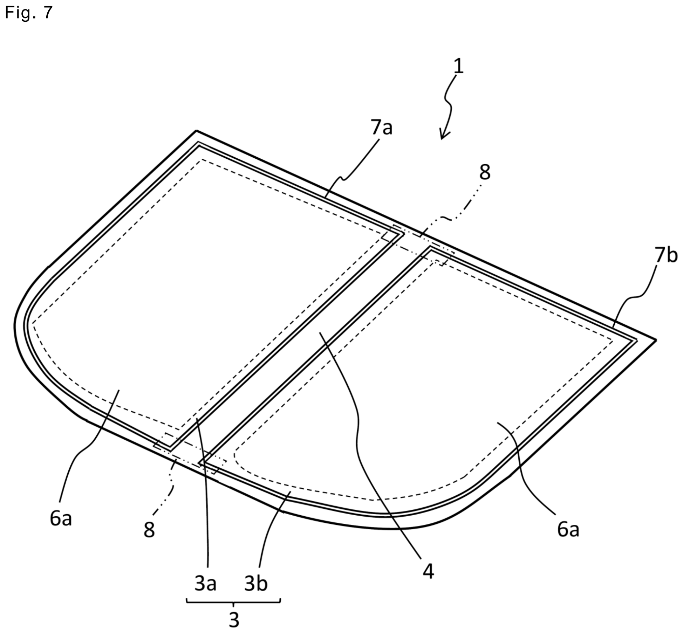

As shown schematically in Fig. 7, this configuration is formed by arranging sheet member 2 such that first wire 7a and second wire 7b are arranged in a planar arrangement in line symmetrical positions, and such that sheet member 2 covers first wire 7a and second wire 7b. In other words, continuous sheet member 2 collectively covers the portion defined by first wire 7a, the portion defined by second wire 7b, and the portion between first wire 7a and second wire 7b.

First wire 7a and second wire 7b are connected by hinge mechanisms 8 schematically shown in Fig. 7. In this embodiment, two sheet members 2 are arranged facing each other with first and second wires 7a and 7b therebetween. Therefore, when viewed from either side of this shielding member 1, sheet members 2 are visible and first and second wires 7a and 7b are invisible. Sheet member 2 provides decor, and first and second wires 7a and 7b and other components do not detract from the decor. Hinge mechanisms 8 are located only at the ends of the mutually opposing sides of first and second wires 7a and 7b, this portion being only a very small portion of entire shielding member 1. Therefore, hinge mechanisms 8 in this form hardly affect the appearance of shielding member 1.

When shielding member 1 is folded, sheet member 2 is folded into two parts around intermediate part 4 located between first and second wires 7a and 7b. First and second wires 7a and 7b are not bent, and shielding member 1 is folded by bending intermediate part 4 of sheet member 2, intermediate part 4 not being fixed to first and second wires 7a and 7b but rather, being located between them. Since rigid first and second wires 7a and 7b are not bent, but only flexible and thin sheet member 2 is bent, a user can intuitively and easily know the position to be folded, and shielding member 1 is folded smoothly and easily. Sound-absorbing layer 6a is not disposed in intermediate part 4 of thin sheet member 2, and intermediate part 4 is less rigid and more flexible, and therefore, shielding member 1 is less likely to be damaged even after repeated folding and unfolding, resulting in good durability. Hinge mechanisms 8 may have any structural configuration as long as it is connected to each of first and second wires 7a and 7b, holds first and second wires 7a and 7b spaced from each other, and does not inhibit bending of intermediate part 4 located between first and second wires 7a and 7b.

Thus, in shielding member 1 of this embodiment, first wire 7a and first plate part 3a are connected to second wire 7b and second plate part 3b via intermediate part 4 including hinge mechanisms 8 such that shielding member 1 can be easily folded around a starting point that is intermediate part 4. For example, shielding member 1 of this embodiment can be folded easily and stably compared to a configuration in which, rather than shielding member having intermediate part 4 including hinge mechanisms 8, sheet member instead has a thin portion and is folded around the thin portion.

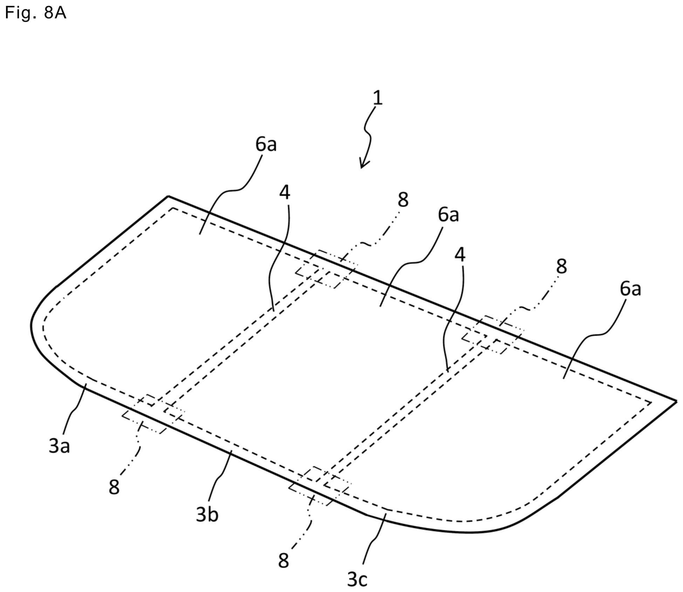

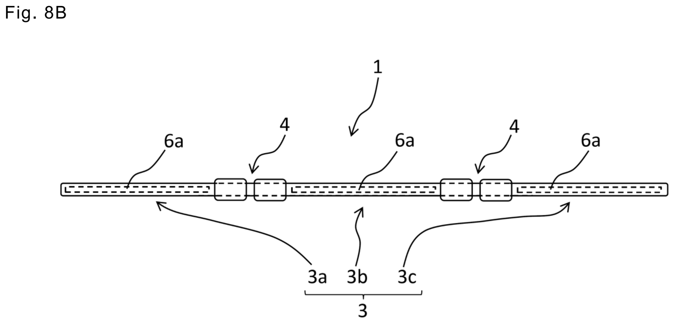

The example of shielding member 1 described above has two plate parts 3a and 3b and one intermediate part 4, but shielding member 1 is not limited to this configuration. For example, shielding member 1 may have three plate parts 3a, 3b, and 3c and two intermediate parts 4 and thus be foldable in three parts as schematically shown in Figs. 8A and 8B. Furthermore, shielding member 1 may have four or more plate parts 3 and can be folded in four or more parts.

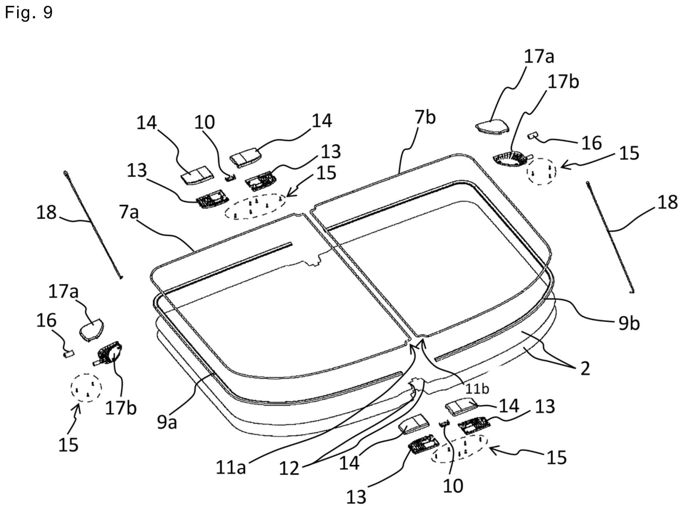

A more detailed example of shielding member 1 of the invention described above will next be described. As shown in Fig. 9, shielding member 1 in this example has first and second wires 7a and 7b made of metal and flexible edging parts 9a and 9b made of synthetic resin that covers portions of first and second wires 7a and 7b on two overlapping sheet members 2. Sheet members 2 are made of fabric known as jersey knitted fabric. Edging parts 9a and 9b comprise synthetic leather (e.g., soft leather C-mat). Edging parts 9a and 9b are not provided at positions where first wire 7a and second wire 7b are adjacent to each other on opposite sides but otherwise cover first and second wires 7a and 7b.

First and second wires 7a and 7b are preferably brass wire, hard steel wire, piano wire, or other wire with a circular cross section that is mainly composed of iron or brass and that can be welded. First and second wires 7a and 7b preferably have an elastic modulus of from 0.98 × 10⁵ N/mm² to 2.06 x 10⁵ N/mm² to reduce deflection due to the weight of the product itself. The modulus of elasticity of the wire in this example is 1.0 x 10⁵ N/mm². Since first and second wires 7a and 7b in this example are not twisted when folded, there is no need to differentiate the moment of inertia of area between the longitudinal direction and the transverse direction, and first and second wires 7a and 7b are circularly formed with equal strength and stiffness against external forces in either direction. Thus, since first and second wires 7a and 7b have a circular cross-sectional shape, they can be rotatably fitted into first and second recesses 10a and 10b described below and used as the shaft of hinge mechanisms 8. Even with a smaller moment of inertia of area and section modulus than conventional wires, the strength and rigidity of the product can expected to be maintained. The diameter of the wire is preferably 3.0 mm to 5.0 mm. If the diameter of the wire is smaller than 3.0 mm, it will lack rigidity, and if it is larger than 5.0 mm, the mass of the wire will be too large. The moment of inertia of area of the wire is from 3.98 mm⁴ to 12.57 mm⁴ and the section modulus is from 2.65 mm³ to 6.28 mm³. Specifically, the diameter of the wire used in this example is 3.5 mm, the moment of inertia of area is 7.4 mm⁴, and the section modulus is 4.2 mm³. The looped first and second wires 7a and 7b are formed by bending the wire extruded by motor or hydraulic power to the desired shape by a jig and then welding the two ends together.

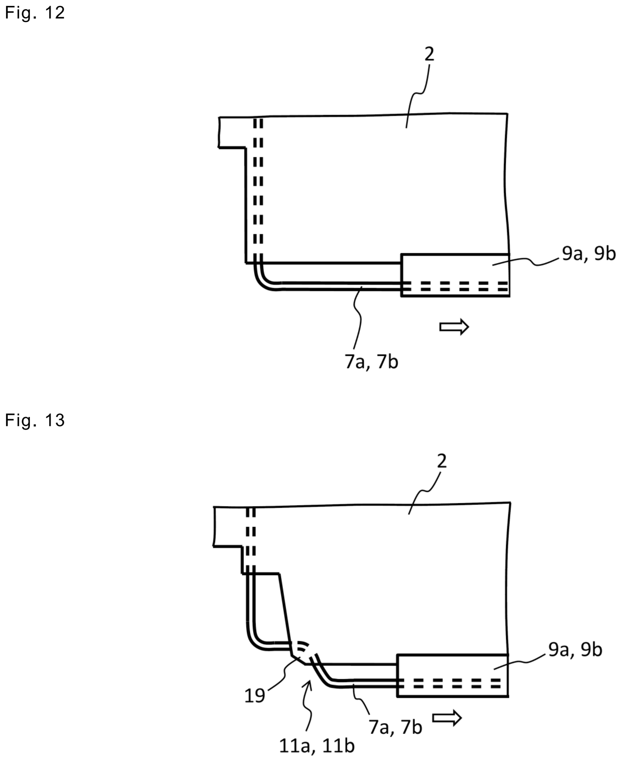

Crank-shaped portions 11a and 11b, which are bent in two steps, are formed at the positions of the ends of the sides of first wire 7a and second wire 7b which are not in contact with edging parts 9a and 9b. Cutout portions 12 shaped generally along crank-shaped portions 11a and 11b are formed in sheet member 2 at positions opposite crank-shaped portions 11a and 11b. Crank-shaped portions 11a and 11b and cutout portions 12 are omitted in Fig. 7 and elsewhere for the sake of simplicity. Synthetic resin lower covers 13, which constitute a part of hinge mechanisms 8, are disposed on the outside (lower side in the drawing) of sheet member 2 at positions opposite crank-shaped portions 11a and 11b and cutout portions 12. Lower covers 13 are, for example, injection molded products of PA66+GF (polyamide 66 with glass fibers). Synthetic resin clamps 10 are mounted across lower covers 13 disposed on first plate part 3a side and lower covers 13 disposed on second plate part 3b side. A portion of first wire 7a exposed without being covered by edging part 9a as shown in Fig. 13 is rotatably fitted into first recess 10a of clamp 10 attached to lower cover 13. Similarly, a portion of second wire 7b exposed without being covered by edging part 9b is rotatably fitted into second recess 10b of clamp 10. Clamps 10 are positioned across two lower covers 13 and maintain a spacing between first group (first wire 7a and first plate part 3a) and second group (second wire 7b and second plate part 3b). Lower covers 13 and synthetic resin upper covers 14 (e.g., injection molded products of PA66+GF), which are part of hinge mechanisms 8, overlap between parts of first and second wires 7a and 7b and clamps 10.

Specifically, first and second wires 7a and 7b are placed on upper covers 14 with the top and bottom of Fig. 9 flipped vertically. First and second wires 7a and 7b placed on upper covers 14 are then fitted into first and second recesses 10a and 10b of clamps 10. Lower covers 13 then cover upper covers 14 with clamps 10 therebetween. Upper covers 14 and lower covers 13 have substantially the same outline and are secured to each other by screws 15. Upper covers 14 and lower covers 13 are secured to each other with a portion of first and second wires 7a and 7b and clamps 10 accommodated thereby constituting hinge mechanisms 8. Another sheet member 2 is then placed over sheet member 2 on which edging parts 9a and 9b and first and second wires 7a and 7b are placed, with edging parts 9a and 9b, first and second wires 7a and 7b, and hinge mechanism 8 therebetween, although depiction of these parts is omitted in Fig. 9.

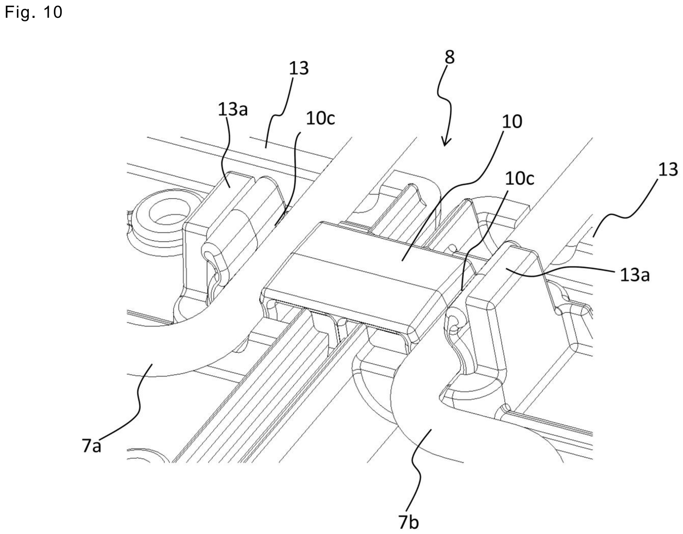

Due to this configuration, one lower cover 13 and first wire 7a are connected to other lower cover 13 and second wire 7b by means of clamps 10, and one lower cover 13 and first wire 7a can be rotated relative to other lower cover 13 with second wire 7b. By relative rotation, first wire 7a with first plate part 3a and second wire 7b with second plate part 3b are openable and closable with respect to each other to either an open state in which first wire 7a with first plate part 3a are connected to second wire 7b with second plate part 3b such that they extend horizontally and continuously (see Figs. 1A and 1B) or a closed state in which first wire 7a with first plate part 3a are folded over second wire 7b with second plate part 3b (see Figs. 2A and 2B). Whether in the open state or closed state, first wire 7a with first plate part 3a and second wire 7b with second plate part 3b are connected by clamps 10 without separation. As shown in Fig. 10, to prevent first and second wires 7a and 7b fitted into first and second recesses 10a and 10b of clamps 10 from coming out of first and second recesses 10a and 10b, openings 10c in first and second recesses 10a and 10b are at least partially narrower than the diameters of first and second wires 7a and 7b. Furthermore, to prevent first and second wires 7a and 7b from coming out due to elastic deformation of the portions of clamps 10 that form the inner walls of openings 10c of clamps 10 that allows openings 10c of first and second recesses 10a and 10b to widen, lower covers 13 each have regulating portions 13a that inhibit deformation of the portions that form the inner walls of openings 10c of clamps 10.

Gripping parts 17 are attached to the outer ends of first plate part 3a and second plate part 3b of sheet member 2, i.e., attached to the ends opposite to the portion in which first plate part 3a and second plate part 3b face each other. Specifically, upper part 17a and lower part 17b, which are injection molded products of synthetic resin, e.g., polyacetal (POM), overlap each other with sheet member 2 and pin 16 therebetween, and secured to each other by screws 15. Gripping part 17 thus configured serves as a handle and facilitates operations when the user installs, removes, or folds shielding member 1 in the luggage compartment or the like of a vehicle. Suspension cord 18 made of resin fiber (e.g., 8-strand cord made of processed yarn of 6 nylon (registered trademark)) may be attached to the outer ends of first plate part 3a and second plate part 3b of sheet member 2. Suspension cord 18 is stitched onto a portion of shielding member 1 and is also attached to a portion of the interior of vehicle 30 in which shielding member 1 is installed. The length and attachment position of suspension cord 18 is determined such that shielding member 1 is held horizontal when the hatchback door of vehicle 30 is closed as shown in Fig. 4, but such that shielding member 1 opens sufficiently to allow the user easy access to the interior of the luggage compartment 31 when the hatchback door is opened. Furthermore, suspension cord 18 is preferably attached to the right or left end of shielding member 1 so as not to obstruct the driver's rearward view. However, suspension cord 18 is removable, and suspension cord 18 must be removed when shielding member 1 is removed.

First and second wires 7a and 7b in this example have crank-shaped sections 11a and 11b. First and second wires 7a and 7b are for the most part sandwiched by sheet members 2. However, there are portions of the first and second wires 7a and 7b that are not covered by sheet member 2 and that are exposed at both ends of the sides where first and second wires 7a and 7b face each other to allow first and second wires 7a and 7b to fit into first and second recesses 10a and 10b of hinge mechanisms 8. In the comparative example of shielding member 1 shown in Fig. 12, sheet member 2 may shift in the direction indicated by the arrow in the vicinity of the exposed portions of first and second wires 7a and 7b that do not have crank-shaped portions and that are not covered by sheet member 2, and this shifting may result in wrinkles. In contrast, in this example, as shown in Fig. 13, crank-shaped portions 11a and 11b are provided near the portions of first and second wires 7a and 7b that fit into first and second recesses 10a and 10b of hinge mechanisms 8. Using a portion of the bent portions of these crank-shaped portions 11a and 11b, sheet members 2 located above and below are stitched together and secured to each other such that these stitched portions 19 are caught in crank-shaped portions 11a and 11b. Even if sheet member 2 should shift in the direction of the arrows in Figs. 12 and 13, stitched portions 19 hooked to crank-shaped portions 11a and 11b prevent sheet member 2 from shifting in the direction of the arrows. As a result, wrinkles in sheet member 2 can be suppressed. After stitched portion 19 is formed and hooked to crank-shaped portions 11a and 11b in this manner, hinge mechanisms 8 are attached.

In the comparative example shown in Fig. 12, the provision of a portion of first and second wires 7a and 7b that engages with sheet member 2 at the exposed portion of first and second wires 7a and 7b is difficult. However, in the example shown in Fig. 13, first and second wires 7a and 7b are provided with crank-shaped portions 11a and 11b that include bent portions, and stitched portions 19 of sheet member 2 can therefore be easily caught by crank-shaped portions 11a and 11b. As a result, shifting of sheet member 2 can be restrained both in the direction of the arrow and in a direction perpendicular to the arrow.

Thus, shielding member 1 in this example can be easily folded in two. Moreover, this shielding member 1 has excellent durability and an appealing design. In particular, the provision of crank-shaped portions 11a and 11b in first and second wires 7a and 7b suppresses wrinkles in sheet member 2.

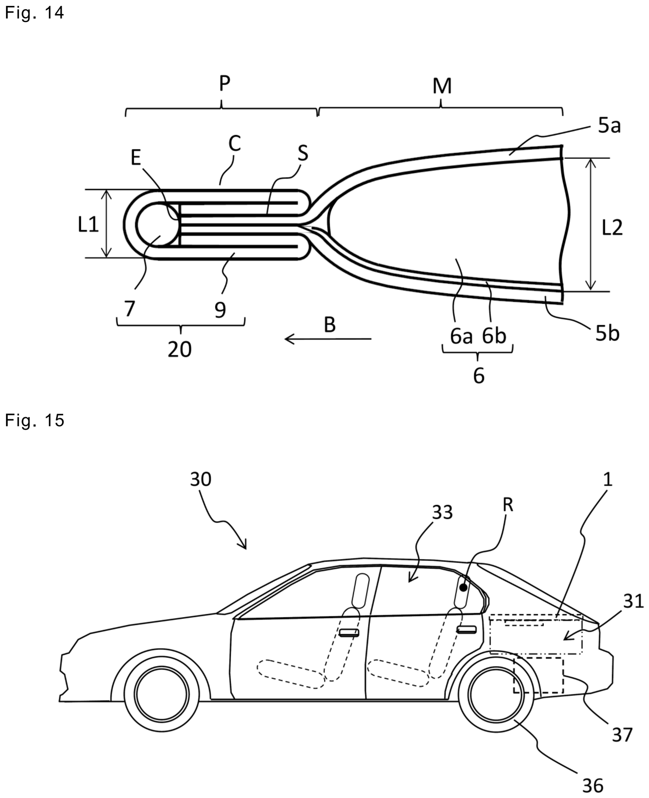

An example of the detailed structure of sheet member 2 will next be described. Fig. 14 shows a cross-sectional view of sheet member 2 cut at a position corresponding to A-A line in Fig. 1A. Sheet member 2 has an almost rectangular outer shape that includes central portion M located at the center in a plan view and outer circumferential portion P located around the periphery of central portion M. In addition to the aforementioned pair of skin members 5a and 5b and intermediate layer 6, shielding member 1 has outer circumference holding member 20 located at the outer circumference. Outer circumference holding member 20 sandwiches and holds sheet member 2. The pair of skin members 5a and 5b overlap each other at outer circumference portion P and are held by outer circumference holding member 20. In central portion M, the pair of skin members 5a and 5b face each other with a space interposed. Intermediate layer 6 is disposed in the space between the pair of skin members 5a and 5b in this central portion M. Intermediate layer 6 includes at least sound-absorbing layer 6a and preferably includes sound-absorbing layer 6a and sound-insulating layer 6b. Each of skin members 5a and 5b extends from central portion M to a portion of outer circumferential portion P but does not reach the outermost edge of shielding member 1.

Outer circumference holding member 20 of this embodiment includes aforementioned wire 7 and cloth member (edging part) 9 that wraps around at least a portion of wire 7. As shown in Fig. 14, wire 7 in this embodiment has a circular cross-section. Cloth member 9 contacts almost half of the contour of the cross-section of wire 7 from the outer circumference side of wire 7, then extends toward the center of shielding member 1 at the upper and lower sides of wire 7, and overlaps each of upper and lower skin members 5a and 5b. However, the cross-section of wire 7 is not limited to a circular shape and may also be rectangular, trapezoidal, or the like. Upper cloth member 9 is folded back toward the lower side and contacts upper skin member 5a in the area of overlap with skin member 5a. Lower cloth member 9 is folded back toward the upper side and contacts lower skin member 5b in the area of overlap with skin member 5b. Skin members 5a and 5b extend outwardly to or just before the point of contact with wire 7. Accordingly, wire 7 is located at the outer circumference side of skin members 5a and 5b, and cloth member 9 covering wire 7 from the outer circumference side overlaps skin members 5a and 5b on the central portion M side compared to wire 7. Cloth member 9, which is folded over and doubled, sandwiches the area where skin members 5a and 5b directly overlap with each other from the top and bottom. Cloth member 9 is then stitched to skin members 5a and 5b to thereby secure outer circumference holding member 20 to skin members 5a and 5b. The outer circumferential edges of skin members 5a and 5b are held by outer circumferential holding member 20 over substantially the entire circumference, and the space in the center is thus sealed at the outer circumference. As shown in Fig. 14, intermediate layer 6 is disposed in the space between the pair of skin members 5a and 5b. As mentioned above, intermediate layer 6 preferably includes sound-absorbing layer 6a and sound-insulating layer 6b (see Figure 3).

Shielding member 1 has a pair of skin members 5a and 5b and intermediate layer 6 including at least sound-absorbing layer 6a. For example, when used as a tonneau cover as shown in Fig. 4, shielding member 1 exhibits light shielding properties, and should sound generated in luggage compartment 31 or sound generated in the lower part of the vehicle body enter luggage compartment 31, shielding member 1 further blocks such sound and prevents the sound from being transmitted into the vehicle interior 33. This arrangement can reduce noise perceived by passengers. Furthermore, when folded and installed on the bottom portion or the inner surface of the side wall of luggage compartment 31, shielding member 1 can prevent sound generated at the bottom or sides of the vehicle body from entering luggage compartment 31 and thus suppresses the transmission of sound into the vehicle interior 33.

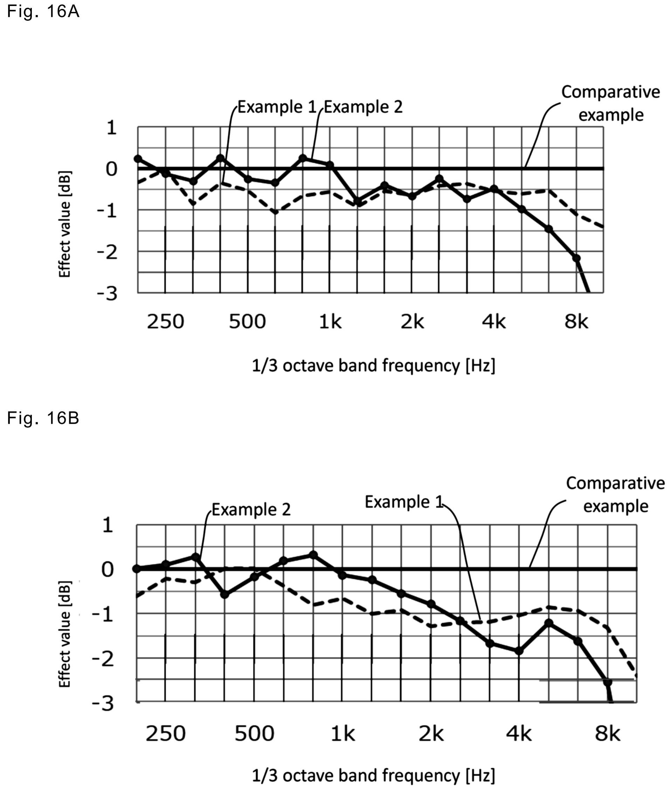

Tests were conducted to determine the soundproofing performance of this shielding member 1 when used as a tonneau cover, and the results are shown in the graphs in Figs. 16A-16C in comparison with the soundproofing performance of conventional tonneau covers. These graphs show the soundproofing performance for various frequencies of sound and are expressed as relative values (effect values) with the soundproofing performance of a tonneau cover (package tray) that is a common vehicle interior material as the standard (0 dB). The smaller the effect value, the better the soundproofing performance. The following materials were used as test members: a shielding member (tonneau cover) of the comparative example without a sound-absorbing layer, shielding member 1 of the present invention including sound-absorbing layer 6a but not including sound-insulating layer 6b (Example 1), and shielding member 1 of the present invention including sound-absorbing layer 6a and sound-insulating layer 6b (Example 2).

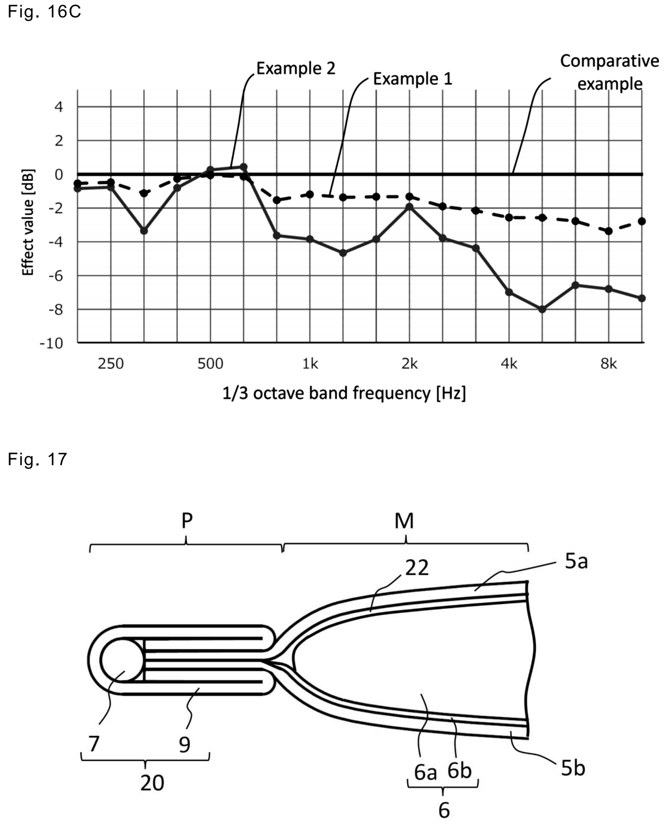

In the conducted tests, the test member was installed in a vehicle above luggage compartment 31 as a tonneau cover, as shown in Fig. 15, and a sound generator (vibrator) was installed in the rear seat (position R). Sound receivers were installed in the following three locations. The sound receivers were installed in four positions around rear tires 36, six positions around motor 37 for an electric vehicle, and two positions under the test member in luggage compartment 31 (on the deck). The vehicle was not driven. The average of the results for each sound-receiving position at each location was then determined and shown in the graphs of Figs. 16A-16C. These test results are theoretical values that indicate the degree of sound transmission between the rear seat and rear tires 36, motor 37, or the inside of luggage compartment 31. Although this test examines sound transmission in the direction opposite to the direction of the actual sound transmission (transmission from rear tires 36, motor 37, or inside luggage compartment 31 toward the rear seat (position R)), the sound insulation performance in the actual transmission direction is expected to be similar. Fig. 16A shows the results of sound received in the vicinity of rear tire 36 when the sound was generated at the rear seat, Fig. 16B shows the results of sound received in the vicinity of motor 37 when the sound was generated at the rear seat, and Fig. 16C shows the results of sound received inside luggage compartment 31 when the sound was generated at the rear seat.

As clearly shown in the graphs of Figs. 16A-16C, shielding member 1 of this embodiment exhibits much higher sound insulation performance than the shielding member (tonneau cover) of the comparative example. In particular, according to shielding member 1 of Example 2, merely adding three relatively lightweight and inexpensive layers (e.g., lower skin member 5b made of needle punched fabric, sound-insulating layer 6b made of polyethylene, and sound-absorbing layer 6a made of felt) to skin member 5a that is equivalent to a conventional shielding member, high soundproofing performance was obtained based on the vibration-damping property of intermediate layer 6 without significantly increasing the weight or manufacturing cost.

Examples are next presented of the relative value of the thicknesses and the weight per unit area of each layer of shielding member 1 of the invention described above. In one example, the thickness of lower skin member 5b is 1.5 t and its weight per unit area is 150 g/m², the thickness of sound-insulating layer 6b is 0.5 t and its weight per unit area is 150 g/m², the thickness of sound-absorbing layer 6a is 12 t and its weight per unit area is 400 g/m², and the thickness of upper skin member 5a is 1 t and its weight per unit area is within the range from 200 g/m² to 300 g/m². The thickness of each layer is expressed as a relative value when the thickness of upper skin member 5a is 1 t. Compared to the configuration of the shielding member in the comparative example that has only one layer of a sheet made of jersey woven fabric, for example, the configuration shown in Fig. 3 has three additional layers (lower skin member 5b, sound-insulating layer 6b, and sound-absorbing layer 6a). These three additional layers may be bonded to each other, which is a construction that reduces manufacturing costs compared to, for example, a stitched configuration. However, these additional three layers can also be in a configuration in which the layers are not bonded to each other. In this configuration, the total weight per unit area of these additional three layers is 700 g/m². In particular, if the weight per unit area of intermediate layer 6 is between 100 g/m² and 600 g/m², intermediate layer 6 is lightweight and highly effective in reducing sound transmission. The soundproofing performance can be adjusted by changing the weight per unit area of intermediate layer 6. For example, adjusting the weight per unit area of intermediate layer 6 enables adjustment of the frequency band within which soundproofing is particularly effective to obtain a more appropriate soundproofing effect for each use.

When shielding member 1 of this embodiment is placed, for example, in luggage compartment 31 of vehicle 30, sound-absorbing layer 6a of intermediate layer 6 is preferably located above sound-insulating layer 6b. By means of this configuration, sound from luggage compartment 31 can be shielded so that sound from luggage compartment 31 is not transmitted into vehicle interior 33, while sound in vehicle interior 33 is reflected by shielding member 1 and transmission of the sound to the passengers is suppressed. In addition, because soft sound-absorbing layer 6a and upper skin member 5a are located on the upper side of shielding member 1, the upper surface of shielding member 1 is flexible and stable when an article is placed on it.

As mentioned above, intermediate layer 6 preferably has sound-insulating layer 6b and sound-absorbing layer 6a. However, although not shown in the drawing, the present invention includes a configuration in which intermediate layer 6 has only sound-absorbing layer 6a and no sound-insulating layer 6b because this configuration can also achieve the aforementioned effects of the invention. Such a configuration is effective for reducing costs. Multiple sound-insulating layers 6b and/or multiple sound-absorbing layers 6a can also be adopted. Shielding member 1 of the present invention preferably has a nonpermeable configuration because such a configuration is more effective in suppressing sound transmission.

As shown in Fig. 14, maximum thickness L2 of intermediate layer 6 in the direction of the thickness of shielding member 1 is preferably greater than overall thickness L1 of shielding member 1 at the portion in which cloth member 9 of outer holding member 20 wraps around a part of wire 7. According to this configuration, the vibration damping effect is greater, and furthermore, an article placed on shielding member 1 is more stably supported. If there is no intermediate layer 6 or if intermediate layer 6 is thin, central portion M is thin and easily flexes, resulting in a lack of stability when an article is placed on it, but if intermediate layer 6 is thick as described above, the article can be held in a stable manner.

When cloth member 9 of outer circumference holding member 20 is stitched to skin members 5a and 5b as described above, stitched portion S of cloth member 9 is preferably located closer to central portion M than to center C of outer circumference portion P in direction B from central portion M toward outer circumference portion P, as shown in Fig. 14, and edges E of skin members 5a and 5b are preferably located outside of central portion C. According to this configuration, even if sound that is generated in or that has intruded into central portion M leaks from edges E of skin members 5a and 5b, the sound is blocked by cloth member 9 of outer circumference holding member 20, and leakage to the outside of shielding member 1 can therefore be highly reliably suppressed. Also, according to this configuration, outer circumference holding member 20 and skin members 5a and 5b can be easily and securely joined.

In another embodiment of shielding member 1 of the present invention shown in Fig. 17, intermediate layer 6 and one of the skin members, e.g., the upper skin member 5a, are not in contact in central portion M, and gap 22 therefore exists between intermediate layer 6 and upper skin member 5a. According to this configuration, the sound absorption effect of gap 22 further improves the effectiveness of suppressing sound transmission. If intermediate layer 6 can be held stably, intermediate layer 6 and lower surface skin member 5b may also be configured so that intermediate layer 6 and lower skin member 5b are not in contact and gap 22 exists between intermediate layer 6 and lower skin member 5b. However, a configuration in which intermediate layer 6 is in contact with neither of skin members 5a and 5b is undesirable due to the likelihood that intermediate layer 6 itself will vibrate.

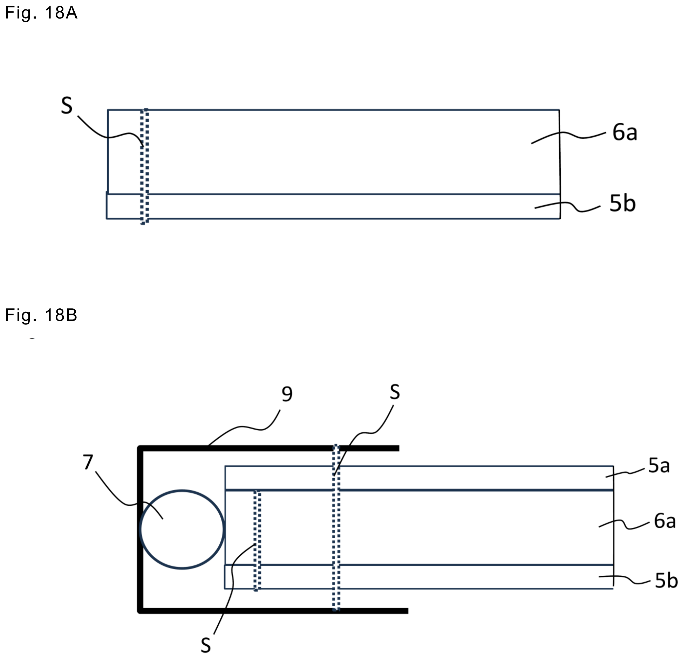

A more favorable configuration of shielding member 1 of the present invention will next be described. When sheet member 2 has a three-layer structure in which sound-absorbing layer 6a made of felt or the like is disposed between a pair of skin members 5a and 5b, a two-step stitching process to secure these three layers 5a, 6a, and 5b is preferable. A first step entails stitching two layers, i.e., one skin member (e.g., skin member 5b) and one sound-absorbing layer 6a, as shown schematically in Fig. 18A. A second step is stitching the other skin member 5a to sound-absorbing layer 6a that has already been stitched to one skin member 5b. By means of this two-step stitching process, quality can be more reliably achieved than when stitching layers 5a, 6a, and 5b in one step, a part of sound-absorbing layer 6a can be kept from protruding from stitched portion S, and stitched portion S can be kept from riding up onto the position of overlapping wire 7. During the second stitching step, cloth member (edging part) 9 is preferably also stitched.

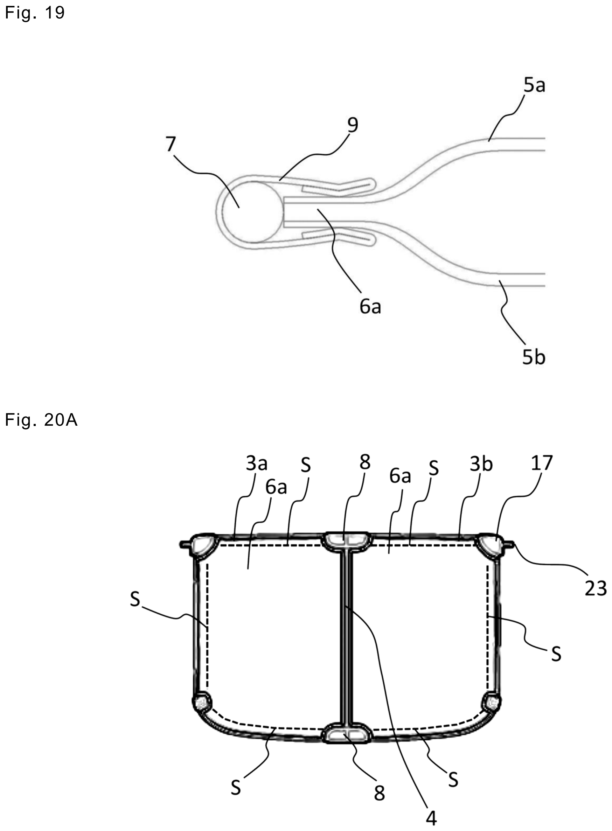

As shown in Fig. 19, the pair of skin members 5a and 5b and sound-absorbing layer 6a preferably extend to a position of contact with wire 7 at the outer circumference of shielding member 1. Since there is no gap or only a small gap between wire 7 and sound-absorbing layer 6a, sound transmission through the gap can be reduced. To achieve this configuration in which sound-absorbing layer 6a extends to the point of contact with wire 7, stably securing each layer 5a, 6a, and 5b by the abovementioned two-step stitching process is effective.

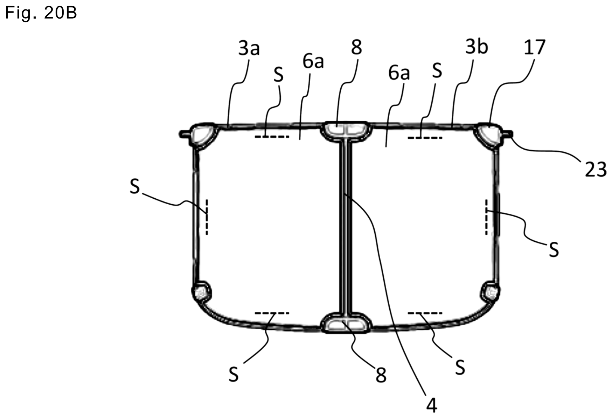

When stitching sound-absorbing layer 6a of sheet member 2, as shown in Figs. 20A and 20B, stitching preferably continues along each side of each plate part 3 except for the position of contact with intermediate part 4 at the outer circumference of each plate part 3 when viewed from a direction orthogonal to sheet member 2. For example, as shown in Fig. 20A, in a configuration in which sheet member 2 includes two plate parts 3a and 3b and one intermediate part 4, stitching the three sides of each plate part 3a and 3b enables stable securement of sound-absorbing layer 6a made of felt or the like. As a result, twisting and misalignment of sound-absorbing layer 6a can be suppressed when shielding member 1 is folded, reopened, or transported. However, these sides need not be stitched over their entire length, and only portions may be stitched on each side as shown in Fig. 20B. Stitched portions S may be the first step of stitching shown in Fig. 18A (the portion where the two layers of one skin member 5 and sound-absorbing layer 6a are stitched together).

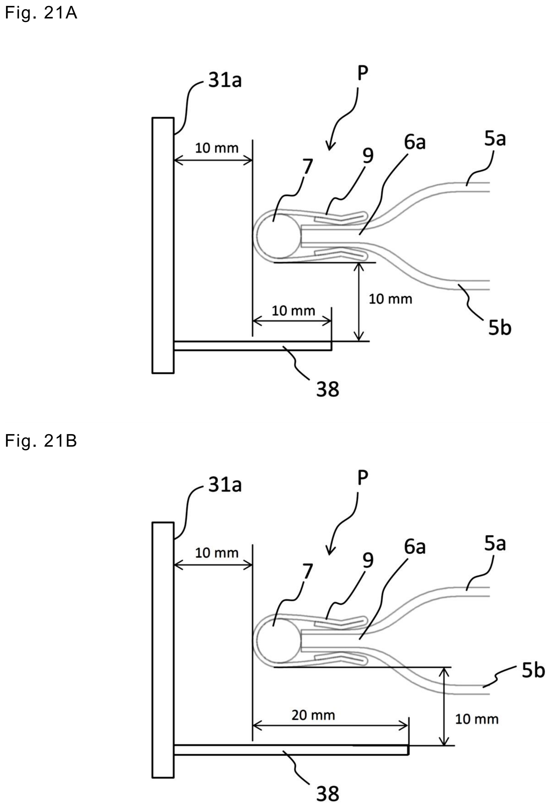

Figs. 21A and 21B show a preferred installation structure of shielding member 1 in luggage compartment 31. In this installation structure, when a gap of, for example, 10 mm exists between sidewall inner surface (deck side) 31a of luggage compartment 31 and the outer edge of shielding member 1, shelf-like protrusion 38 is provided that projects from sidewall inner surface 31a of luggage compartment 31 toward the interior of luggage compartment 31 and that faces outer circumference portion P of shielding member 1. By means of this configuration, the gap between inner surface 31a of the side wall of luggage compartment 31 and the outer periphery of shielding member 1 is closed by the overlap of the outer periphery of shielding member 1 and shelf-like protrusion 38. As a result, sound transmission through outside of the outer circumference of shielding member 1 is suppressed. If shelf-like protrusion 38 is enlarged to increase the area of overlap between the outer circumference of shielding member 1 and shelf-like protrusion 38, the soundproofing effect will be even greater. This installation structure and aforementioned shielding member 1 constitute the shielding mechanism of the invention.

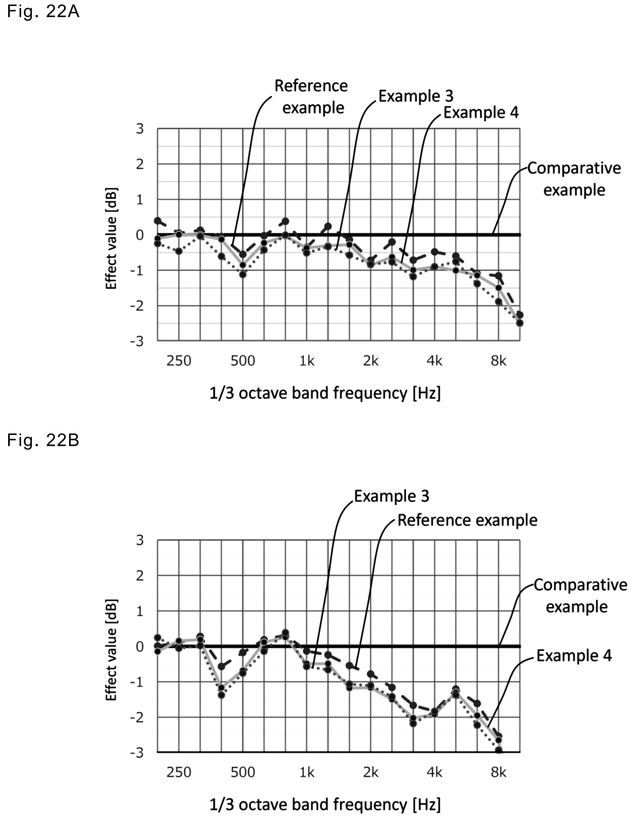

Similar to the aforementioned test, a sound generator (vibrator) was installed in the rear seat (position R) and sound receivers were installed in the vicinity of rear tires 36 and in the vicinity of motor 37 of an electric vehicle. Sound receiving tests were conducted for a case in which a shielding member similar to the comparative example in the aforementioned test was installed in the upper part of luggage compartment 31 without shelf-like protrusion 38 on inner surface 31a of the side wall of luggage compartment 31 (comparative example), for a case in which shielding member 1 of the present invention was installed in the upper part of luggage compartment 31 without shelf-like protrusion 38 on inner surface 31a of the side wall of luggage compartment 31 (reference example), for a case in which shielding member 1 of the present invention was installed in the upper part of luggage compartment 31 with shelf-like protrusion 38 that extends 10 mm toward the interior of luggage compartment 31 on inner surface 31a of the side wall of luggage compartment 31 (Example 3) as shown in Fig. 21A, and for a case in which shielding member 1 of the present invention was installed in the upper part of luggage compartment 31 having shelf-like protrusion 38 that extends 20 mm toward the interior of luggage compartment 31 on inner surface 31a of the side wall of luggage compartment 31 (Example 4) as shown in Fig. 21B. The results of sound reception in the vicinity of rear tires 36 are shown in Fig. 22A and the results of sound reception in the vicinity of motor 37 are shown in Fig. 22B. The gap between inner surface 31a of the side wall of luggage compartment 31 and the outer edge of shielding member 1 in the comparative example and the reference examples was about 20 mm, and the gap between inner surface 31a of the side wall of luggage compartment 31 and the outer edge of shielding member 1 in Examples 3 and 4 was about 10 mm. According to these tests, it was found that an excellent soundproofing effect can be obtained by overlapping the outer circumference of shielding member 1 and shelf-like protrusion 38 when shelf-like protrusion 38 is formed on inner surface 31A of the side wall of luggage compartment 31, and the larger the overlapping area, the greater the soundproofing effect. Thus, an installation structure having shelf-like protrusion 38 is effective in soundproofing vehicle interior 33. The outer circumference of shielding member 1 and shelf-like protrusion 38 need not be in direct contact. For example, if shielding member 1 is held in the upper part of luggage compartment 31 by being supported by pin-shaped projections 23 (see for example Fig. 1A), on support part 32 (see for example Fig. 4) in luggage compartment 31, or by being suspended by suspension cord 18 (see Fig. 9), a space may exist between shielding member 1 and shelf-like protrusion 38.

### Description of Reference Numerals

- 1: shielding member
- 2: sheet member
- 3, 3a, 3b, 3c: plate part
- 4: intermediate part
- 5, 5a, 5b: skin member
- 6: intermediate layer
- 6a: sound-absorbing layer
- 6b: sound-insulating layer
- 7, 7a, 7b: wire
- 8: hinge mechanism
- 9, 9a, 9b: edging part (cloth member)
- 10: clamp
- 10a, 10b: recess
- 10c: opening
- 11a, 11b: crank-shaped portion
- 12: cutout portion
- 13: lower cover
- 13a: regulating portion
- 14: upper cover
- 15: screw
- 16: pin
- 17: gripping part
- 17a: upper part
- 17b: lower part
- 18: suspension cord
- 19: stitched portion
- 20: outer circumference holding member
- 31: luggage compartment
- 31a: inner surface of side wall
- 32: support part
- 33: vehicle interior
- 34: recess
- 35: ceiling area (roof area)
- 36: rear tire
- 37: motor
- 38: shelf-like protrusion

## Claims

1. A shielding member comprising a flexible sheet member that has a plurality of plate parts and an intermediate part located between each of adjacent plate parts, wherein
the sheet member is foldable around the intermediate part and can selectively assume a state in which the sheet member is spread as a single plate and a state in which a plurality of the plate parts is folded over each other, and
the plate parts, with the exception of the intermediate part, contain a sound-absorbing layer.

2. The shielding member according to claim 1, wherein the sheet member comprises a pair of skin members arranged facing each other and an intermediate layer sandwiched between the pair of skin members, wherein the intermediate layer comprises the sound-absorbing layer.

3. The shielding member according to claim 1 or 2, further comprising a plurality of wires each corresponding to one of a plurality of said plate parts and a hinge mechanism corresponding to the intermediate parts, wherein
each of the wires surrounds at least a portion of a corresponding plate part,
the hinge mechanism is located in the intermediate part and is connected to each of the wires so as to hold the wires of adjacent plate parts in a mutually rotatable manner, and
a plurality of the wires and plate parts can be folded around the hinge mechanism of the intermediate part so as to overlap each other.

4. The shielding member according to any one of claims 1 to 3, wherein the shielding member is placed inside a vehicle in a folded state and functions as a soundproofing member in which the sound-absorbing layers inside the plate parts overlap each other to form a multiple-soundproofing-wall structure.

5. The shielding member according to any one of claims 1 to 4, wherein the folded shielding portion is held by a support part on the bottom portion or on the inner surface of a side wall of a luggage compartment of the vehicle.

6. The shielding member according to any one of claims 1 to 5, wherein an intermediate layer of the sheet member has a sound-insulating layer that also has thermal barrier properties.

7. The shielding member according to any one of claims 1 to 6, wherein an intermediate layer of the sheet member has a sound-absorbing layer and a sound-insulating layer, and wherein the shielding member is provided with a stitched portion in which one skin member is first stitched to the sound-absorbing layer, and a stitched portion in which the other skin member is next stitched to the sound-absorbing layer that is stitched to the one skin member.

8. The shielding member according to any one of claims 1 to 7, further comprising a plurality of wires each corresponding to a respective one of the plurality of said plate parts, wherein each of the wires surrounds at least a portion of a respective plate part, and the pair of the skin members and the sound-absorbing layer extend to a point of contact with the wire at the outer circumference of the shielding member.

9. The shielding member according to any one of claims 1 to 8, wherein the sound-absorbing layer of the sheet member is stitched to a skin member along each side of the plate parts along the outer circumference of each plate part when viewed from a direction orthogonal to the sheet member, except for positions of contact with the intermediate part.

10. A shielding mechanism comprising the shielding member according to any one of claims 1 to 9 and a shelf-like protrusion that protrudes toward the interior of a luggage compartment from an inner surface of a side wall of the luggage compartment of a vehicle and that faces the outer circumference portion of the shielding member.
